# EUROPEAN PATENT APPLICATION

(11) **EP 4 191 779 A1**
(43) Date of publication of application: **07.06.2023**
(21) Application number: 22775917.2
(22) Date of filing: 23.02.2022
(51) Int. Cl.: H01M 50/449, H01M 50/451, H01M 50/46, H01M 10/052

(54) **SEPARATOR FOR RECHARGEABLE LITHIUM BATTERY AND RECHARGEBALE LITHIUM BATTERY COMPRISING SAME**

(30) Priority: 22.03.2021 KR 20210036622
(71) Applicant: Samsung SDI Co., Ltd., Yongin-si, Gyeonggi-do 17084 (KR)
(72) Inventor: KIM, Byung-Soo, Yongin-si, Gyeonggi-do 17084 (KR); KIM, Namju, Yongin-si, Gyeonggi-do 17084 (KR); LEE, Yeonho, Yongin-si, Gyeonggi-do 17084 (KR); CHO, Jaehyun, Yongin-si, Gyeonggi-do 17084 (KR)
(74) Representative: Taor, Simon Edward William
(86) International application number: PCT/KR2022/002626
(87) International publication number: WO 2022/203215

(57) **Abstract**

Provided are a separator for a rechargeable lithium battery and a rechargeable lithium battery comprising the same, the separator for a rechargeable lithium battery comprising a substrate and an adhesive coating layer, on one surface of the substrate, and comprising polymer clusters.

## Description

### TECHNICAL FIELD

It relates to a separator for a rechargeable lithium battery and a rechargeable lithium battery including the same.

### BACKGROUND ART

Rechargeable lithium batteries are attracting attention as power sources for various electronic devices because of high discharge voltage and high energy density.

A rechargeable lithium battery has a structure in which a positive electrode and a negative electrode are faced each other and into which an electrolyte is injected, and has a separator positioned between the positive electrode and the negative electrode to prevent the short-circuit. The separator may porous material through which ions or electrolytes may be transmitted.

Generally, when the external short circuit of the battery is occurred, high current flows to generate heat, causing the increases in the temperature of the battery, and to start thermal runaway, causing occurrence of the evaporation of the electrolyte, and the heat generation causes to operate the safety valve or ignite.

For preventing the heat explosion by suppressing the heat increases in the event of the external short-circuited, the separator having a function in which the porous material of heat-meltable resin such as polyolefin, and the like is used as a separator, the separator is melted and blocked the pores to terminate the battery reaction and suppress the heat generation, when the temperature is more than or equal to the determined temperature, that is, the separator having a function called as a shutdown function has been studied. However, when the separator using the heat-meltable resin is used for the large rechargeable batteries such as the battery for storing power or electro vehicles, the slightly low heat radiating causes to surprisingly increase the inner temperature of the battery due to the increases in the heat-generation amount from the short circuit and the like, for example, to rapidly increase for 400 °C to 500 °C. As such, the rapid increasing in internal temperature of the battery causes to occur melt down phenomenon in which the separator is completely melted. The occurrence of the melt down provides the contact between the positive electrode and the negative electrode which occurs to the short circuit and to generate heat, thereby occurring the heat explosion.

In order to prevent such problems, an organic/inorganic composite separator prepared by coating a mixture of inorganic particles and a binder polymer on at least one surface of a polyolefin-based porous substrate to form a porous active material, is proposed. However, the effects for preventing the shrinkage of the separator during the overheating are insufficiently exhibited, and thus, the investigation therefore have been still required.

### TECHNICAL PROBLEM

One embodiment provides a separator for a rechargeable lithium battery exhibiting excellent heat-resistance and a to an electrode.

Another embodiment provides a rechargeable lithium battery including the separator.

### TECHNICAL SOLUTION

According to one embodiment, a separator for a rechargeable lithium battery including a substrate and an adhesive coating layer formed on the substrate, and including a polymer cluster.

The polymer may be polyvinylidene fluoride (PVdF), polyvinylidene a fluoride-hexafluoropropylene (PVdF-HFP) copolymer, an acrylate-based polymer, a styrene-butadiene rubber (SBR), carboxymethyl cellulose (CMC), ethylene vinyl acetate (EVA), hydroxyethyl cellulose (HEC), polyvinyl alcohol (PVA), polyvinyl butyral (PVB), an ethylene-acrylic acid copolymer, acrylonitrile, an acetic acid vinyl derivative, polyethylene glycol, an acryl-based rubber, or combinations thereof or combination thereof.

The adhesive coating layer may have a thickness of 5 % to 30 % based on the total thickness, 100 %, of the separator.

The adhesive coating layer may have an area corresponding to 30 % to 80 % based on the total area, 100 %, of one side of the substrate.

The adhesive coating layer may have a loading amount of 0.1 g/m² to 1.2 g/m, as a reference of one side.

The polymer cluster may have an average diameter, D50 of 0.1 µm to 200 µm.

The substrate may include polyethylene, polypropylene polyolefin, polyester, polytetrafluoroethylene (PTFE), polyacetal, polyamide, polyimide, polycarbonate, polyether ether ketone, polyaryletherketone, polyetherimide, polyamideimide, polybenzimidazole, polyethersulfone, polyphenylene oxide, a cyclic olefin copolymer, polyphenylene sulfide, polyethylene naphthalene, glass fiber, or combinations thereof.

A ceramic layer may further include between the substrate and the adhesive coating layer. The ceramic layer may include SiO₂, Al₂O₃, Al (OH)₃, AlO(OH), TiO₂, BaTiO₂, ZnO₂, Mg(OH)₂, MgO, Ti(OH)₄, ZrO₂, aluminum nitride, silicon carbide, boron nitride, or combinations thereof. The ceramic layer may further include a polymer binder.

According to another embodiment, a rechargeable lithium battery including a negative electrode including a negative active material; a positive electrode including a positive active material; the separator positioned on the negative electrode and the positive electrode; and a non-aqueous electrolyte.

Other embodiments are included in the following detailed description.

### ADVANTAGEOUS EFFECTS

A separator for a rechargeable lithium battery according to one embodiment have excellent heat-resistance and adherence to the electrode, thereby improving the cycle-life characteristics.

### BRIEF DESCRIPTION OF THE DRAWINGS

FIG. 1 is a schematic view showing a rechargeable lithium battery according to one embodiment.
FIG. 2A shows a SEM photograph (100 times) for the adhesive coating layer of a separator according to Example 1.
FIG. 2B shows a SEM photograph (5000 times) for the adhesive coating layer of a separator according to Example 1.

### BEST MODE FOR PERFORMING INVENTION

Hereinafter, embodiments of the present invention are described in detail. However, these embodiments are exemplary, the present invention is not limited thereto and the present invention is defined by the scope of claims.

One embodiment provide a separator for a rechargeable lithium battery including a substrate; and an adhesive coating layer formed on at least one side of the substrate, and including a polymer cluster.

The adhesive coating layer may be formed one side or both sides of the substrate. When the adhesive coating layer is formed both sides of the substrate, the modification of the battery may be effectively inhibited, and thus, the more stable battery characteristics may be exhibited.

In addition, the adhesive coating layer may include a polymer cluster which indicates three-dimensional matrix, rather than a dense layer.

The substrate may include polyethylene, polypropylene polyolefin, polyester, polytetrafluoroethylene (PTFE), polyacetal, polyamide, polyimide, polycarbonate, polyether ether ketone, polyaryletherketone, polyetherimide, polyamideimide, polybenzimidazole, polyether sulfone, polyphenylene oxide, a cyclic olefin copolymer, polyphenylene sulfide, polyethylene naphthalene, glass fiber, or combinations thereof. According to one embodiment, the substrate may include polyethylene.

The substrate may have a thickness of 4 µm to 20 µm.

Th polymer may include polyvinylidene fluoride (PVdF), a polyvinylidene fluoride-hexafluoropropylene (PVdF-HFP) copolymer, an acrylate-based polymer, a styrene-butadiene rubber (SBR), carboxymethyl cellulose (CMC), ethylene vinyl acetate (EVA), hydroxyethyl cellulose (HEC), polyvinyl alcohol (PVA), polyvinyl butyral (PVB), an ethylene-acrylic acid copolymer, acrylonitrile, an acetic acid vinyl derivative, polyethylene glycol, an acryl-based rubber, or combinations thereof or combination thereof.

The acrylate-based polymer may be acrylate-based polymer including a functional group selected from a (meth)acrylate group, a vinyl group, a hydroxy group, an epoxy group, an oxane group, an oxetane group, an ester group, an isocyanate group, or combinations thereof. The examples of the acrylate-based polymer may be polyester acrylate, epoxy acrylate, urethane acrylate, vinyl acrylate, trimethylpropane acrylate, butanediol diacrylate, ethylhexyl acrylate, pentaerythritol triacrylate, or combinations thereof.

The polymer may have a weight-average molecular weight (Mw) of 20,000 g/mol to 1,000,000 g/mol. When the weight-average molecular weight (Mw) of the polymer is within the range, the excellent adherence efficiency may be exhibited and the viscosity which is easier to handle, may be maintained.

In one embodiment, the adhesive coating layer may have a thickness corresponding to 5 % to 30 % based on the total thickness, 100 %, of the separator. The thickness of the adhesive coating layer may be a thickness of one side, when it is formed on one side of the substrate. Furthermore, in case of forming the adhesive coating layer on both sides, the thickness of the adhesive coating layer may indicate to a thickness of one side. In addition, the total thickness of the separator indicates the sum thickness of the substrate and the thickness of the adhesive coating layer formed on the substrate. Furthermore, even though the adhesive coating layer is formed on both sides, the total thickness of the separator indicates to the sum thickness of the substrate and the thickness of one side of the adhesive coating layer. In addition, if the ceramic layer is formed on the separator, regardless of whether the adhesive coating layer is formed on both sides, when the ceramic layer is formed on one side, the total thickness of the separator indicates to the sum of the thickness of the substrate, the thickness of one side of the adhesive coating layer, and the thickness of the one side of the ceramic layer, and alternatively, when the ceramic layer is both sides, the total thickness of the separator indicates to the sum of the thickness of the substrate, the thickness of the one side of the adhesive coating layer, and the thickness of the both sides of the ceramic layer.

When the thickness of the adhesive coating layer is within the range, the adhesion between the active material layer and the separator may be improved, without increases in resistance.

Furthermore, the adhesive coating layer may be formed at an area corresponding to 30 % to 80 % based on the total area, 100 %, of the one side of the substrate. That is, as described in above, the adhesive coating layer may have a three-dimensional matrix which does not completely and densely cover on the substrate. For example, the adhesive coating layer may be formed to cover as an area corresponding to 30 % to 80 % of the area of one side of the substrate. As such, the adhesive coating layer covered with a part of the substrate may reduce the resistance for transferring lithium ions.

The area of the adhesive coating layer may be measured by using an optical microscope (Olympus, LG-PS2) with an Image analyzer tool. Such an area of the adhesive coating layer may be also similarly obtained from the separator after charging and discharging and separating from the battery.

The adhesive coating layer may have a loading amount of 0.1 g/m² to 1.2g/m², as a reference of one side.

The polymer cluster may have a size of 0.1 µm to 200 µm. When the size of the polymer cluster is within the range, the adherence may be well maintained and the lower resistance may be exhibited, so that the excellent battery performances may be exhibited. In one embodiment, the polymer cluster may have a length (width) and thickness, and the size refers to a length (width), and thus, the thickness does not need to be limited.

The adhesive coating layer may further include an amine-based compound. The amine-based compound acts to improve the mixability. The amine-based compound may be polyethyleneimine (e.g., Epomin), amino pentanol, aminobutane amide, cyclohexene amine, benzyl amine, methyl ethyl pentyl amine, triethylene amine, or combinations thereof.

When the adhesive coating layer further includes the amine-based compound, a weight ratio of the polymer of the polymer cluster and the amine-based compound may be 95:5 to 99.9:0.1.

In one embodiment, a ceramic layer may be further included between the substrate and the adhesive coating layer. When the separator is further includes the ceramic layer, the separator having excellent heat-resistant may be secured. As a result, a rechargeable lithium battery exhibiting good thermal stability, and improved cycle-life characteristics and safety may be realized. A ceramic in the ceramic layer may be SiO₂, Al₂O₃, Al (OH)₃, AlO(OH), TiO₂, BaTiO₂, ZnO₂, Mg(OH)₂, MgO, Ti(OH)₄, ZrO₂, aluminum nitride, silicon carbide, boron nitride, or combinations thereof.

A thickness of the ceramic layer may be 10 % to 40 % based on the total thickness, 100 %, of the separator. The thickness of the ceramic layer may be the thickness of one side when it is formed on a single side of the substrate, and may be the thickness of both sides when it is formed on both sides. In addition, the total thickness of the separator refers to the sum of the thickness of the substrate, and the thicknesses of the ceramic layer and the adhesive coating layer formed on the substrate, and even when the adhesive coating layer is formed on both sides, the thickness is the sum of the thickness of the substrate, and the thickness of the one side of the adhesive coating layer and the thickness of the ceramic layer, and herein, the thickness of the ceramic layer indicates the thickness of one side, when it is formed on a single side, or thickness of both sides, when it is formed on both sides.

The thickness of the ceramic layer thicker than the range causes to become the total thickness of the separator to be thick, thereby deteriorating the battery capacity. Furthermore, while maintaining the total thickness of the separator, the increases in the thickness of the coating layer, indicate that the thickness of the substrate is relatively thin, thereby decreasing mechanical strength and resulting in shortcoming related stability. If the thickness of the ceramic layer is lower than the range, it is not sufficient to increase the heat-resistant.

The ceramic layer may further include a first polymer binder and a second polymer binder. The first a polymer binder may be an acryl-based polymer binder, and the second polymer binder may be an acrylate-based polymer binder.

The acryl-based polymer, as the first polymer, may be a multi-functional urethane acryl polymer, or an acryl-based polymer including a functional group of a (meth)acrylate group, a vinyl group, a hydroxy group, an epoxy group, an oxane group, an oxetane group, an ester group, an isocyanate group, or combination thereof.

The acryl-based polymer may have a weight average molecular weight Mw) of 10,000 g/mol to 100,000 g/mol.

In addition, the acrylate-based polymer as the second polymer, may be dipentaerythritol hexaacrylate, methacrylate, butyl acrylate, butyl methacrylate, or combinations thereof. The second polymer may have a weight average molecular weight (Mw) of 600 g/mol to 10000 g/mol.

A mixing ratio of the first polymer binder and the second polymer binder may be 5:5 to 9:1 by weight ratio. When the mixing ratio of the first polymer binder and the second polymer binder is within the range, the heat resistance may be further improved.

In case of further including the first polymer binder and the second polymer binder in the ceramic layer, an amount of the ceramic may be 80 wt% to 90 wt% based on the total, 100 wt% of the ceramic layer, a sum weight of the first polymer binder and the second polymer binder may be 1 wt% to 20 wt%.

The polymer cluster included in the adhesive coating layer according to one embodiment may be formed by coagulating a polymer due to a mixed solvent of water and an organic solvent to generate precipitation, when the coating composition including a polymer and the mixed solvent of water the organic solvent is coated on a substrate and dried to prepare the polymer cluster. That is, the using of the organic solvent mixed with water cause to occur the coagulation of the polymer, and if a using of only organic solvent, rather than an aqueous solvent does not cause to coagulation of polymer, and thus, to prepare no cluster. For example, a using of alcohol mixed with acetone does not a cluster due to the coagulation of a polymer.

The organic solvent may be acetone, ethanol, methanol, ethyl ethyl ketone, butyl acetate, or combinations thereof.

When it is more detail illustrated for the polymer cluster formation, a polymer is added to water and then an organic solvent is added thereto. According to the addition of the organic solvent, a polymer cluster may be prepared.

A mixing ratio of water and the organic solvent in the mixed solvent, or a mixing ratio of water and the organic solvent in a separated addition, may be 3:97 to 20:80 by volume ratio 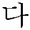 . When the mixing ratio of water and the organic solvent is within the range, the coating layer composition may be suitably coated, and the polymer coagulation may be suitably occurred. If the amount of water is larger than the range, it is difficult to coat the coating layer composition on the substrate, and the amount of water is smaller than the range, the polymer coagulation is not sufficient.

In addition of the polymer to water, the polymer may be added to water, so that the amount of the polymer is to be 5 wt% to 30 wt% in water. When an amount of the polymer is within the range, the excellent adherence to the electrode may be exhibited, and low battery resistance may be exhibited. The amount of the polymer smaller than the range decreases the adherence to the electrode, causing the deformation of the battery structure. If an amount of the polymer is larger than the range, the battery resistance may be slightly increased, thereby deteriorating the battery characteristics.

The polymer may be a latex type. The polymer may be polyvinylidene fluoride (PVdF), a polyvinylidene fluoride-hexafluoropropylene (PVdF-HFP) copolymer, an acrylate-based polymer, a styrene-butadiene rubber (SBR), carboxylmethyl cellulose (CMC), ethylene vinyl acetate (EVA), hydroxyethyl cellulose (HEC), polyvinyl alcohol (PVA), polyvinyl butyral (PVB), an acrylic acid copolymer, acrylonitrile, acetic acid vinyl derivative, polyethylene glycol, an acryl-based rubber, or combinations thereof.

When the coating layer composition is illustrated in more detail, the coating layer composition may be prepared by admixing a polymer to water and adding the organic solvent thereto, and the addition of the organic solvent may cause coagulation of the polymer.

In addition, the coating process may be a spin coating, a dip coating, a bar coating, a die coating, a slit coating, a roll coating, an ink jet printing, but is not limited thereto.

The drying may be performed at a temperature of 25 °C to 100 °C.

As such, as the adhesive coating layer includes the polymer cluster, the interfacial resistance between the electrode and the separator, may be reduced. This is reason why the adhesive coating layer may have a slightly coarse structure owing to the polymer cluster, thereby reducing resistance for moving lithium.

An amine-based compound may be further added to the coating layer composition. In case of further including the amine-based compound, the coating composition may be prepared by admixing the polymer to water, adding the amine-based compound to the resulting mixture, and adding the organic solvent thereto.

The amine-based compound may be polyethyleneimine (e.g., Epomin), amino methyl pentenol, amino butaneamide, cyclohexene amine, benzyl amine, methyl ethyl pentyl amine, triethyleneamine, or combinations thereof.

An amount of the amine-based compound in the coating layer composition may be used in order to have mixing ratio of the polymer and the amine-based compound of 95:5 to 99.9:0.1. When the mixing ratio of the polymer and the amine-based compound is within the range, the adhesion to the substrate and bondage between the coating layer may be strengthened.

When the separator further includes the ceramic layer, the composition for the ceramic layer is coated on the substrate, dried, and heat-treated to firstly the ceramic layer, before the preparation of the adhesive coating layer.

The composition for the ceramic layer may prepared by a ceramic to a solvent. Furthermore, the composition for the ceramic layer may further include a first polymer binder and a second polymer binder.

The detail descriptions for the ceramic layer preparation are as below.

First of all, a first polymer is added to a first organic solvent to prepare a first polymer liquid and a second polymer is added to a second organic solvent to prepare a second polymer liquid. In addition, a ceramic is added to a third organic solvent to prepare a ceramic liquid. The addition of the ceramic to the third organic solvent may be performed at 25 °C to 100 °C.

The first polymer liquid and the second polymer liquid may be mixed, the ceramic liquid may be added to the resulting mixture to prepare a composition for a ceramic layer, the composition for the ceramic layer may be coated on a substrate, dried, and heat-treated.

The first organic solvent may be acetone, ethanol, or combinations thereof, and the second organic solvent may be acetone, N-methyl pyrrolidone, dimethyl acetate (DMAc) or combinations thereof. The third organic solvent may be acetone, ethanol, or combinations thereof.

In the first polymer liquid, an amount of the first polymer may be 5 wt% to 30 wt% based on the total, 100 wt% of the first polymer liquid, and an amount of the second polymer may be 5 wt% to 30 wt% based on the total, 100 wt% of the second polymer liquid.

Furthermore, an amount of the ceramic may be 20 wt% to 50 wt% based on the total, 100 wt% of the ceramic liquid.

In mixing process, amounts of the first polymer liquid, the second polymer liquid are adjusted that the first polymer and the second polymer is to have 50:50 to 90:10 by weight ratio, and the ceramic liquid may be used to have the ceramic of 80 parts by weight to 99 parts by weight based on the total, 100 parts by of the fist polymer and the second polymer.

The coating may be performed by a gravure coating, a spin coating, a dip coating, a bar coating, a die coating, a slit coating, a roll coating, an inkjet printing, and the like, but is not limited thereto.

The drying may be performed at 25 °C to 100 °C.

The heat-treatment may be performed at 40 °C to 100 °C for 1 hour to 24 hours. When the heat-treatment is performed at the range of temperatures for the range of hours, the moisture may be effectively removed from the separator, the binder may be more hardened to secure more stably heat resistance.

The ceramic may be used by pulverizing it at a suitable range.

Another embodiment provides a rechargeable lithium battery including a negative electrode, a positive electrode, a separator positioned between the negative electrode and the positive electrode, and an electrolyte.

The separator is the separator according to one embodiment.

The negative electrode includes a current collector and a negative active material layer formed on the current collector and including the negative active material.

The negative active material includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be a carbon material, that is, a generally-used carbon-based negative active material used in a rechargeable lithium battery. Examples of the carbon-based negative active material may be crystalline carbon, amorphous carbon, or a combination thereof. The crystalline carbon may be unspecified shaped, sheet, flake, spherical, or fiber shaped natural graphite or artificial graphite, and the amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a silicon-based material, for example, Si, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), a Si-carbon composite, Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), a Sn-carbon composite, and the like, and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide includes a lithium titanium oxide.

The negative active material according to one embodiment may include a Si-C composite including a Si-based active material and a carbon-based active material.

The Si-based active material 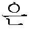 Si, SiOₓ (0 < x < 2), Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), or combinations thereof.

The Si-based active material may have an average particle diameter of 50 nm to 200 nm.

When the particle diameter of the Si particle is within the range, the volume expansion caused during charge and discharge may be suppressed, and a breakage of the conductive path due to crushing of particle may be prevented.

An amount of Si may be 1 wt% to 60 wt% based on the total weight of the Si-C composite, for example, 3 wt% to 60 wt%.

The negative active material according to another embodiment may further include crystalline carbon, together with the Si-C composite.

The negative active material may include both the Si-C composite and crystalline carbon in a mixture of the Si-C composite and crystalline carbon. Herein, the Si-C composite and crystalline carbon may be included at 1:99 to 50:50 by weight ratio. More specifically, the Si-C composite and crystalline carbon may be included at 5:95 to 20:80 by weight ratio.

The crystalline carbon, may, for example, graphite, and more specifically, include natural graphite, artificial graphite, or a mixture thereof.

The crystalline carbon may have an average particle diameter of 5 µm to 30 µm.

In the specification, an average particle diameter refers to a particle diameter (D50) where a cumulative volume is 50 volume% in a cumulative size-distribution curve). The average particle diameter (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

The Si-C composite may further include a shell surrounded on the surface of the Si-C composite, and the shell may include amorphous carbon. A thickness of the shell may be 5 nm to 100 nm.

The amorphous carbon may include soft carbon, hard carbon, mesophase pitch carbide, sintered cokes, or a mixture thereof.

The amorphous carbon may be included in an amount of 1 part by weight to 50 parts by weight based on 100 parts by weight of the carbon-based active material, for example, 5 parts by weight to 50 parts by weight, or 10 parts by weight to 50 parts by weight.

The negative active material layer includes a negative active material and a binder, and may optionally include a conductive material.

In the negative active material layer, an amount of the negative active material may be 95 wt% to 99 wt% based on the total weight of the negative active material layer. In the negative active material layer, an amount of the binder may be 1 wt% to 5 wt% based on the total weight of the negative active material layer. Furthermore, in case of further including the conductive material, the negative active material may be included in an amount of 90 wt% to 98 wt%, the binder may be included in an amount of 1 wt% to 5 wt%, and the conductive material may be included in an amount of 1 wt% to 5 wt%.

The binder improves binding properties of anode active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The positive electrode includes a current collector and a positive active material layer formed on the current collector, including a positive active material.

The positive electrode active material may include lithiated intercalation compounds that reversibly intercalate and deintercalate lithium ions, and specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D₂ (0.90 ≤ a≤1.8, 0 ≤ b≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Co_{b}X_{c}O_{2-α}T_{α} (0.90 ≤ a≤ 1.8, 0 ≤ b ≤ 0.5, 0 ≤ c ≤ 0.5, 0 < α < 2); LiₐNi_{1-b-c}Co_{b}X_{c}O_{2-α}T₂ (0.90 ≤ a ≤ 1.8, 0 ≤ b ≤0.5, 0 ≤ c ≤ 0.5, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a≤ 1.8, 0 ≤ b ≤0.5, 0 ≤ c ≤0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂ PO₄₃ (0 ≤ f ≤2); Li _{(3-f)}Fe₂ PO₄₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like. It is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amount of the binder and the conductive material may be 1 wt% to 5 wt%, respectively based on the total amount of the positive active material layer.

The binder improves binding properties of positive electrode active material particles with one another and with a current collector, and examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The positive active material layer and the negative active material layer may be formed by mixing an active material, binder, and optionally a conductive material in a solvent to prepare an active material composition and coating the active material composition on a current collector. Such an active material layer preparation method is well known and thus is not described in detail in the present specification. The solvent includes N-methyl pyrrolidone and the like, but is not limited thereto. In addition, when the binder is a water-soluble binder in the negative active material layer, the solvent used for preparing the negative active material composition may be water.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-buthyl acetate, methylpropionate, ethylpropionate, propylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone and the like. Furthermore, the alcohol-based solvent may include ethyl alcohol, isopropyl alcohol, and the like, and examples of the aprotic solvent may include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The organic solvent may be used as a mixture of one or more types. When the mixture of two or more types is used, a mixing ratio may be appropriately adjusted according to desired battery performance, which may be understood by a person having an ordinary skill in this field.

In addition, the carbonate-based solvent may desirably include a mixture of a cyclic carbonate and a chain-type carbonate. In this case, when the cyclic carbonate and the chain-type carbonate may be mixed together in a volume ratio of about 1:1 to about 1:9, performance of an electrolyte solution may be enhanced.

When the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

Herein, when the cyclic carbonate and the chain carbonate or the cyclic carbonate and the propionate-based solvent are mixed, they may be mixed in a volume ratio of about 1:1 to about 1:9 and thus performance of an electrolyte solution may be improved. In addition, when the cyclic carbonate, the chain carbonate, and the propionate-based solvent are mixed, they may be mixed in a volume ratio of about 1:1:1 to about 3:3:4. The mixing ratios of the solvents may be also appropriately adjusted according to desirable properties.

The organic solvent may further include an aromatic hydrocarbon-based solvent as well as the carbonate-based solvent. Herein, the carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound of Chemical Formula 1.

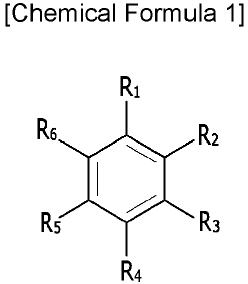

(In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound of Chemical Formula 2 as additive for improving cycle-life.

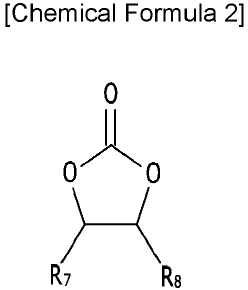

(In Chemical Formula 2, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving a cycle-life may be used within an appropriate range.

The electrolyte may further include vinylethylene carbonate, propane sultone, succinonitrile, or a combination thereof, and the amount used may be appropriately adjusted.

The lithium salt dissolved in an organic solvent supplies a battery with lithium ions, basically operates the rechargeable lithium battery, and improves transportation of the lithium ions between positive and negative electrodes. Examples of the lithium salt include one or two or more one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example an integer ranging from 1 to 20), lithium difluoro(bisoxalato) phosphate, LiCl, Lil, LiB(C₂O₄)₂ (lithium bis(oxalato) borate: LiBOB), and lithium difluoro(oxalato) borate: LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

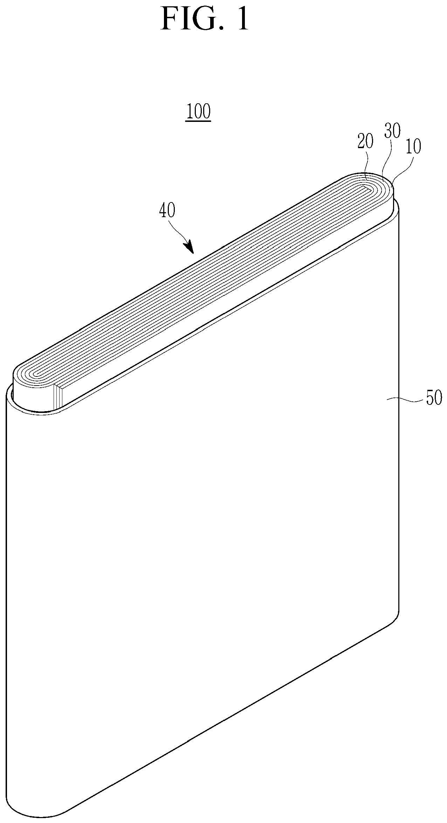

FIG. 1 is an exploded perspective view of a rechargeable lithium battery according to one embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

### MODE FOR PERFORMING THE INVENTION

Hereinafter, examples of the present invention and comparative examples are described. These examples, however, are not in any sense to be interpreted as limiting the scope of the invention.

### (Example 1)

### 1. Preparation of separator

### 1) Preparation of ceramic layer

A multi-functional urethane acryl polymer having a weight average molecular weight (Mw) of about 20,000 g/mol was added to acetone in order to have an amount thereof 30 wt% based on the total, 100 wt% of a first polymer liquid, dissolved, and then agitated using an agitator at 25 °C for 1 hour, to prepare the first polymer liquid.

A dipentaerythritol hexaacrylate binder having a weight average molecular weight (Mw) of about 600 g/mol was added to acetone in order to have 30 wt% based on the total, 100 wt% of a second polymer liquid, dissolved, and then, agitated using an agitator at 25 °C for 1 hour, to prepare a second polymer liquid.

Alumina (Al₂O₃) was pulverized through a bead mill and the pulverized alumina at 25 wt% and acetone at 75 wt% were mixed at 40 °C for 4 hours to prepare a ceramic liquid.

The first polymer liquid was mixed with the second polymer liquid in order to have a mixing ratio of the first polymer and the second a polymer at a weight ratio of 7:3, and then the ceramic liquid was added thereto, to prepare a mixture. Herein, they were used in order to have the total amount of the first polymer and the second polymer of 5 wt% and the amount of alumina of 95 wt%. The resulting mixture was agitated using a power mixer at 25 °C for 2 hours to prepare a composition for a ceramic layer.

The prepared composition for the ceramic layer was coated on the both sides of a 7 µm-thick polyethylene single film (air permeability of 115 seconds/100 cc) in a gravure coating procedure, and then dried-treated under a condition of a drying temperature of 60 °C and a wind speed of 15 m/second for 10 seconds to prepare a coating layer having a coating thickness based on the both sides, of 2 2 µm. Thereafter, the product was heat-treated (thermosetting) at 80 °C for 10 hours to prepare a ceramic layer having a thickness of 2 µm on two surfaces of the substrate based on the two surfaces (total thickness on ceramic layer). In the ceramic layer, an amount of alumina was 95 w% based on the total 100 wt% of the ceramic layer.

### 2) Preparation of adhesive coating layer

A polyvinylidene fluoride-hexafluoropropylene (PVdF-HFP) copolymer (weight average molecular weight of 45,0000 g/mol) latex was mixed with water in order to have a concentration of 8 wt%, and then agitated using an agitator at 25 °C for 30 minutes to prepare a solution including polyvinylidene fluoride-hexafluoropropylene copolymer particulate with an average particle diameter of 100 nm.

Epomin (polyethyleneimine) as an amine group included compound was ad-mixed to the solution in order to have a mixing ratio of the polyvinylidene fluoride-hexafluoropropylene copolymer and Epomin at a weight ratio of 95:5. Acetone was added to the resulting mixture, and in the process, the copolymer was coagulated to prepare a composition for an adhesive coating layer in which a polymer cluster with an average particle diameter of 20 µm was formed. The added amount of acetone was adjusted to have a mixing ratio of water and acetone to be a volume ratio of 1: 20 volume ratio (i.e., a volume ratio of 4.8: 95.2).

The composition for an adhesive coating layer was respectively coated on the ceramic layer in a gravure coating procedure, and then dried-treated under a condition of a drying temperature of 70 °C and a wind speed of 15 m/second for 10 seconds to prepare an adhesive coating layer with a 0.7 µm thickness based on one side, in which a polymer cluster (size (width) of 0.1 µm to 200 µm) of 0.4 g/m² (one side) was included, thereby producing a separator. The adhesive coating layer had a three- dimensional material with the polymer cluster, and herein, the weight ratio of the polymer cluster and Epomine was 95:5. Resultantly, the produced separator had a five-layered structure in which the substrate, the ceramic layers on both surfaces of the substrate and the adhesive coating layers respectively on other surfaces of the ceramic layer facing to the surface contacting to the substrate.

### 2. Fabrication of a half-cell

94 wt% of artificial graphite, 3 wt% of ketjen black, 3 wt% of polyvinylidene fluoride were mixed in an N-methyl pyrrolidone solvent to prepare a composition for a negative active material layer, and the composition for the negative active material layer was coated on a copper current collector, dried, and pressurized to prepare a negative electrode.

The adhesive coating layer of the separator was positioned to contact the negative active material layer and a lithium metal counter electrode was positioned to contact the substrate of the separator, and then a half-cell was fabricated by using an electrolyte according to the general procedure. As the electrolyte, 1.5M LiPF₆ dissolved in a mixed solvent of ethylene carbonate, ethyl methyl carbonate and dimethyl carbonate (2:1:7 by volume ratio) was used.

### (Example 2)

### 1. Preparation of separator

### 1) Preparation of ceramic layer

A ceramic layer having a thickness of 2 µm on two surfaces of the substrate based on the two surfaces (total thickness on ceramic layer) was prepared on a 7 µm-thick polyethylene single film by the same procedure as in Example 1.

### 2) Preparation of adhesive coating layer

The composition for an adhesive coating layer of Example 1 was coated respectively on the ceramic layer in a gravure coating procedure and dried to prepare an adhesive coating layer with a 1.2 µm thickness based on one side, in which a polymer cluster (size (width) of 0.1 µm to 200 µm) of 0.7 g/m² (one side) was included, thereby producing a separator. The adhesive coating layer had a three- dimensional material with the polymer cluster. Resultantly, the produced separator had a five-layered structure in which the substrate, the ceramic layers on both surfaces of the substrate and the adhesive coating layers respectively on other surfaces of the ceramic layer facing to the surface contacting to the substrate.

### (Example 3)

### 1. Preparation of separator

### 1) Preparation of ceramic layer

A ceramic layer having a thickness of 2 µm on two surfaces of the substrate based on the two surfaces (total thickness on ceramic layer) was prepared on a 7 µm-thick polyethylene single film by the same procedure as in Example 1.

### 2) Preparation of adhesive coating layer

The composition for an adhesive coating layer of Example 1 was coated respectively on the ceramic layer in a gravure coating procedure and dried to prepare an adhesive coating layer with a 1.7 µm thickness based on one side, in which a polymer cluster (size (width) of 0.1 µm to 200 µm) of 1.0 g/m² (one side) was included, thereby producing a separator. The adhesive coating layer had a three- dimensional material with the polymer cluster. Resultantly, the produced separator had a five-layered structure in which the substrate, the ceramic layers on both surfaces of the substrate and the adhesive coating layers respectively on other surfaces of the ceramic layer facing to the surface contacting to the substrate.

### (Comparative Example 1)

### 1. Preparation of separator

### 1) Preparation of ceramic layer

A ceramic layer having a thickness of 2 µm on two surfaces of the substrate based on the two surfaces (total thickness on ceramic layer) was prepared on a 7 µm-thick polyethylene single film by the same procedure as in Example 1.

### 2) Preparation of adhesive coating layer

A polyvinylidene fluoride-hexafluoropropylene (PVdF-HFP) copolymer (weight average molecular weight of 450,000 g/mol) latex was mixed with water in order to have a concentration of 8 wt%, and then agitated using an agitator (R010 available from IK company) at 25 °C for 30 minutes to prepare a solution including polyvinylidene fluoride-hexafluoropropylene copolymer particulate with an average particle diameter of 100 nm.

Epomin (polyethyleneimine) as an amine group included compound was ad-mixed to the solution in order to have a mixing ratio of the polyvinylidene fluoride-hexafluoropropylene copolymer and Epomin at a weight ratio of 95:5, to prepare a composition for an adhesive coating layer.

The composition for an adhesive coating layer was respectively coated on the ceramic layer in a gravure coating procedure, and then dried to prepare an adhesive coating layer with a 0.4 g/m² (one side). The adhesive coating layer was a dense layer in which clusters were not formed. Resultantly, the produced separator had a five-layered structure in which the substrate, the ceramic layers on both surfaces of the substrate and the adhesive coating layers respectively on other surfaces of the ceramic layer facing to the surface contacting to the substrate.

### 2. Fabrication of a half-cell

A half-cell was fabricated by the same procedure as in Example 1, except that the separator was used.

### (Comparative Example 2)

### 1) Preparation of ceramic layer

A ceramic layer having a thickness of 2 µm on two surfaces of the substrate based on the two surfaces (total thickness on ceramic layer) was prepared on a 7 µm-thick polyethylene single film by the same procedure as in

### Example 1

### 2) Preparation of adhesive coating layer

A polyvinylidene fluoride-hexafluoropropylene (PVdF-HFP) copolymer (weight average molecular weight of 45,0000 g/mol) latex was mixed with water in order to have a concentration of 8 wt%, and then agitated using an agitator at 25 °C for 30 minutes to prepare a solution including polyvinylidene fluoride-hexafluoropropylene copolymer particulate with an average particle diameter of 100 nm.

Epomin (polyethyleneimine) as an amine group included compound was ad-mixed to the solution in order to have a mixing ratio of the polyvinylidene fluoride-hexafluoropropylene copolymer and Epomin at a weight ratio of 95:5, to prepare a composition for an adhesive coating layer 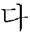 .

The composition for an adhesive coating layer was respectively coated on the ceramic layer in a gravure coating procedure, and then dried to prepare an adhesive coating layer with a 1.2 µm thickness based on one side and with a 0.7 g/m² (one side) polymer loading amount. The adhesive coating layer was a dense layer in which clusters were not formed. Resultantly, the produced separator had a five-layered structure in which the substrate, the ceramic layers on both surfaces of the substrate and the adhesive coating layers respectively on other surfaces of the ceramic layer facing to the surface contacting to the substrate.

### 2. Fabrication of a half-cell

A half-cell was fabricated by the same procedure as in Example 1, except that the separator was used.

### (Comparative Example 3)

### 1. Preparation of separator

### 1) Preparation of ceramic layer

A ceramic layer having a thickness of 2 µm on two surfaces of the substrate based on the two surfaces (total thickness on ceramic layer) was prepared on a 7 µm-thick polyethylene single film by the same procedure as in Example 1.

### 2) Preparation of adhesive layer

A polyvinylidene fluoride-hexafluoropropylene (PVdF-HFP) copolymer (weight average molecular weight of 45,0000 g/mol) latex was mixed with acetone in order to have a concentration of 8 wt%, and then agitated using an agitator (R010 available from IK company) at 25 °C for 30 minutes to prepare a solution including polyvinylidene fluoride-hexafluoropropylene copolymer particulate with an average particle diameter of 100 nm.

Epomin (polyethyleneimine) as an amine group included compound was ad-mixed to the solution in order to have a mixing ratio of the polyvinylidene fluoride-hexafluoropropylene copolymer and Epomin at a weight ratio of 95:5, to prepare a composition for an adhesive coating layer.

In the prepared composition for the adhesive coating layer, precipitates were too largely formed, and thus, it was not used for coating on the ceramic layer.

### Experimental Example 1) Evaluation of physical properties

### 1) Evaluation of air permeability

Air permeability for the separators according to Examples 1 to 3 and Comparative Examples 1 to 2 was measured and the results are shown in Table 1. The air permeability test was performed by measuring time (seconds) until the separator passed 100 cc of air by using an air permeability measuring device (ASAHI-SEICO Co., Ltd, TYPE EG01-55-1MR).

### 2) Evaluation of film resistance

The separators according to Examples 1 to 3 and Comparative Examples 1 to 2 were immersed into an electrolyte of 1.5M LiPF₆ dissolved in a mixed solvent of ethylene carbonate, ethyl methyl carbonate, and dimethyl carbonate (2/1/7 by volume ratio), it was inserted to a lead tab attached aluminum foil electrode, it was sealed to the aluminum pack to fabricate a test cell, and then a resistance of the test cell was measured by a AC impedance (measuring frequency of 100 kHz) at 20 °C, and the film resistance results are shown in Table 1.

### 3) Evaluation of ionic conductivity

Ion conductivity of the separators according to Examples 1 to 3 and Comparative Examples 1 to 2 were measured, and the results are shown in Table 1. Ion conductivity was measured by sampling the separator with a 36 Φ (diameter 36mm) at a room temperature of 25 °C using an electric impedance spectroscopy with a VSP model available from Bio-Logic SAS. Herein, a frequency of 10000 M Hz to 1 Hz was scanned at an open circuit potential, using amplitude of 1000 mV.

### 4) Evaluation of bending strength

The bending strength (electrode adherence) of the separators according to Examples 1 to 3 and Comparative Examples 1 to 2 were measured, and the results are shown in Table 1. The electrode adherence was measured for the adhesion strength of the negative active material layer and the separator (Bending strength) using a 3-Point Bending (INSTRON-3344) method.

The halt-cells according to Examples 1 to 3 and Comparative Examples 1 to 2 were formation charged and discharged to make a charge state for shipping (1 C/36 minutes), and the resulting cells were pressed using a jig at a speed of 5 mm/min, thereby measuring a MAX value (N, MPa) from a Zero-point to 3 mm Bending, and the bending strength was measured for five samples, and the residual three values were as an average value, excepting the maximum and minimum values. The results are shown in Table 1.

### 5) Evaluation of area ratio

A ratio of areas of the adhesive coating layer in the separators according to Examples 1 to 3 and Comparative Examples 1 to 2 was measured by using Image analyzer tool with an optical microscope (Olympus, LG-PS2). The results are shown in Table 1.

### 6) Evaluation of cycle-life characteristic

The half-cells according to Examples 1 to 3 and Comparative Examples 1 to 2 were charged and discharged at 1 C for 500 cycles, a ratio of the discharged capacity at 500^{th} to the discharge capacity at 1^{st} was determined, and the results are shown in Table 1.

**(Table 1)**

| | Example 1 | Example 2 | Example 3 | Comparati ve Example 1 | Co mparative Example 2 |
|---|---|---|---|---|---|
| Loading amount of adhesive coating layer (both surfaces, g/m²) | 0.4/0.4 | 0.7/0.7 | 1.0/1.0 | 0.4/0.4 | 0.7/ 0.7 |

| Type of adhesive coating layer | Three-dimensional matrix including clusters | Three-dimensional matrix including clusters | Three-dimensional matrix including clusters | Dense layer | Dense layer |
|---|---|---|---|---|---|
| Air permeability (second/100 cc) | 140 | 143 | 140 | 155 | 195 |
| Film resistance (Ω) | 0.64 | 0.75 | 0.64 | 0.973 | 1.45 |
| Ionic conductivity (S/mm) | 0.011 | 0.0089 | 0.016 | 0.0069 | 0.0046 |
| Bending strength (N) | 225 | 256 | 327 | 120 | 445 |
| Area ratio of coating layer (%) | 38 | 63 | 80 | 75 | 100 |
| Cycle-life (%) | 93 | 91 | 85 | 36 (electrode interface excitation, Cycle-life too fading) | 78 |

As shown in Table 1, the separator according to Examples 1 to 3, including the adhesive coating layer including clusters, exhibited slightly lower air permeability than Comparative Examples 1 and 2, but very low film resistance, surprisingly excellent ionic conductivity, and especially, extremely improved cycle-life characteristics, compared to Comparative Examples 1 and 2. Comparative Example 2 exhibited good bending strength, but, as described in above, exhibited very low the film resistance, and also exhibited the deteriorated cycle-life characteristic.

### Experimental Example 2): SEM photograph

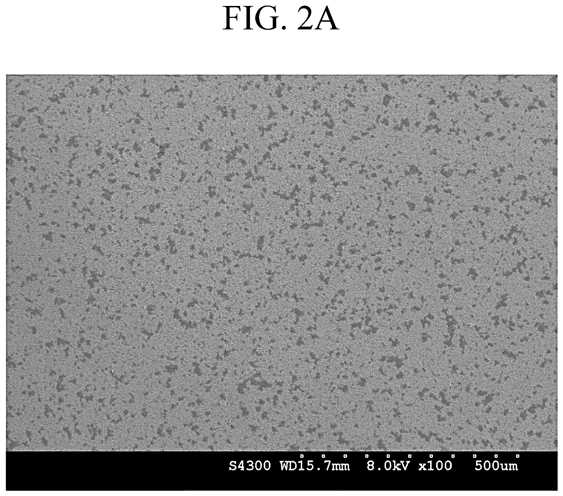

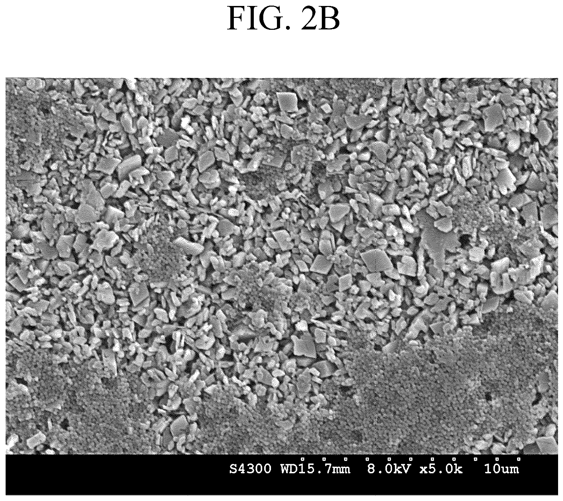

The SEM photograph for the adhesive coating layer of the separator according to Example 1 was taken and the results are shown in FIG. 2A (enlarged by 100 times) and FIG. 2B (enlarged by 5000 times). It is clearly shown from FIG. 2A and FIG. 2B that clusters were well formed on the surface of the adhesive coating layer.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be examples but not limiting the present invention in any way.

## Claims

1. A separator for a rechargeable lithium battery, comprising:
a substrate; and
an adhesive coating layer formed on the substrate and including a polymer cluster.

2. The separator for the rechargeable lithium battery of claim 1, wherein the polymer is polyvinylidene fluoride (PVdF), a polyvinylidene fluoride-hexafluoropropylene (PVdF-HFP) copolymer, an acrylate-based polymer, a styrene-butadiene rubber (SBR), carboxymethyl cellulose (CMC), ethylene vinyl acetate (EVA), hydroxyethyl cellulose (HEC), polyvinyl alcohol (PVA), polyvinyl butyral (PVB), an ethylene-acrylic acid copolymer, acrylonitrile, an acetic acid vinyl derivative, polyethylene glycol, an acryl-based rubber, or combinations thereof or combinations thereof.

3. The separator for the rechargeable lithium battery of claim 1, wherein the adhesive coating layer has a thickness of 5 % to 30 % of the total thickness of the separator.

4. The separator for the rechargeable lithium battery of claim 1, wherein the adhesive coating layer has an area corresponding to 30 % to 80 % based on the total area, 100 %, of one side of the substrate.

5. The separator for the rechargeable lithium battery of claim 1, wherein the adhesive coating layer has a loading amount of 0.1 g/m² to 1.2 g/m², as a reference of one side.

6. The separator for the rechargeable lithium battery of claim 1, wherein the polymer cluster has a particle diameter of 0.1 µm to 200 µm.

7. The separator for the rechargeable lithium battery of claim 1, wherein the substrate includes polyethylene, polypropylene polyolefin, polyester, polytetrafluoroethylene (PTFE), polyacetal, polyamide, polyimide, polycarbonate, polyether ether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalene, glass fiber, or combinations thereof.

8. The separator for the rechargeable lithium battery of claim 1, further comprising a ceramic layer between the substrate and the adhesive coating layer.

9. The separator for the rechargeable lithium battery of claim 8, wherein the ceramic layer comprises SiO₂, Al₂O₃, Al (OH)₃, AlO(OH), TiO₂, BaTiO₂, ZnO₂, Mg(OH)₂, MgO, Ti(OH)₄, ZrO₂, aluminum nitride, silicon carbide, boron nitride, or combinations thereof.

10. The separator for the rechargeable lithium battery of claim 8, wherein the ceramic layer further comprises a polymer binder.

11. A rechargeable lithium battery, comprising:
a negative electrode comprising a negative active material;
a positive electrode comprising a positive active material; and
the separator of any one of claim 1 to claim 10, positioned between the negative electrode and the positive electrode; and
a non-aqueous electrolyte
